# EUROPEAN PATENT SPECIFICATION

(11) **EP 3 521 789 B1**
(45) Date of publication and mention of the grant of the patent: **26.04.2023**
(21) Application number: 16917841.5
(22) Date of filing: 30.09.2016
(51) Int. Cl.: G21F 7/00, G01M 3/18, G01M 3/22, G01M 3/28

(54) **SYSTEM FOR MONITORING LEAKS OF LIQUID FROM A SPENT FUEL POOL**
SYSTEM ZUR ÜBERWACHUNG VON LECKS VON FLÜSSIGKEIT AUS EINEM BECKEN MIT VERBRAUCHTEM BRENNSTOFF
SYSTÈME POUR CONTRÔLER LES FUITES DE LIQUIDE D'UN BASSIN DE RÉTENTION DE COMBUSTIBLE USÉ

(43) Date of publication of application: 07.08.2019
(73) Proprietor: Joint-Stock Company Scientific Research and Design Institute for Energy Technologies Atomproekt, St. Petersburg, 197183 (RU); Joint Stock Company "Science and Innovations" ("Science and Innovations", JSC), Moscow, 119180 (RU)
(72) Inventor: ISAYEV, Serguey Ivanovich, St.Petersburg 197082 (RU); NOVIKOV, Denis Sergueyevich, St.Petersburg 198504 (RU)
(74) Representative: Friese Goeden Patentanwälte PartGmbB
(86) International application number: PCT/RU2016/000653
(87) International publication number: WO 2018/063022

(56) References cited:
- CN-A- 103 558 228
- JP-A- S5 757 233
- JP-A- S6 058 595
- JP-A- S61 256 235
- JP-U- S53 161 683
- RU-C2- 2 589 726
- US-A- 4 635 477

## Description

### Field of the invention

The invention is related to testing and measurement equipment and is aimed at monitoring leakages in spent fuel cooling pools at NPPs.

### Background of the invention

As it is known, spent nuclear fuel storage at NPPs is done in water pools made of metal sheets tightly welded together. However the NPP operational experience shows that despite the fact that the pool steel lining is subject to airtightness tests during production, corrosion and high concentration of stresses in welded joints during operation often cause leakages of radioactive water through the welded joints. The leakages are collected in a drain pan located under the bottom of the pool with the pan flanges adjoining the walls. Moreover, radioactive leakages are adverse due to their environmental hazard and need to be eliminated, so monitoring leakages and detection of a welded joint section where the leakages occurred are necessary. Such detection of leakages is complicated because the metal lining of the pool is connected to the concrete wall surrounding it and acting as a load-bearing member to persist pressure of liquid contained in the pool. This concrete wall also acts as protection from radiation, which makes any visual inspection or contact sensing of welded joints' integrity impossible. Several technical solutions were offered to resolve the above task.

For example, one of the proposed leakage monitoring systems included upper and lower level gauges placed in the cooling pool. Another solution was removal of leakages through the pipe from the drain pan to a storage container with subsequent level sensing upon the return of the liquid to the pool. Those solutions make it possible to detect the fact that leakages occurred and approximately evaluate dynamics of leakage volume change within given unit time. The disadvantages of this solution were as below: it was impossible to detect which exactly welded joint was leaking without preliminary radioactivity removal; radioactive leakages could penetrate the concrete side walls of the cooling pool; a drain pan under the pool bottom was necessary, however, radioactive safety was still not sufficient due to the fact that it was impossible to control the tightness of the drain pan.

Some attempts were taken to improve the accuracy of evaluation of leakage volume changes due to enhanced accuracy of calculation of evaporation and condensation volume within the system. For example, there is information about a leakage detection system applicable for detection of leakages inside NPP premises by means of controlling aerosol activity (utility model patent RF No 100817, IPC F24K 3/14, published on 27.12.2010). This patented system includes an appliance which provides for the separation of air inside the monitored room into condensate and aerial environment. The appliance is connected via an aerial pipe to the measuring unit which measures volumetric aerosol activity, and via a condensate drain pipe - to the measuring module which measures volumetric activity of gamma radioactive nuclides contained in the liquid. At this point the module for measuring volumetric aerosol activity is connected to a negative pressure conduit, and the module for measuring volumetric activity of gamma radioactive nuclides is connected to a condensate discharge pipe which delivers the condensate directly to a special wastewater disposal system. The distinguishing feature of this system is that for separation of air inside the monitored room in condensate and aerial environment it uses the air dehumidifier which consists of one air cooling chamber and at least one air heating chamber located inside the air cooling chamber. On the inner surface of the air cooling chamber there are radiators with their heat removal elements looking inside the air cooling chamber. Peltier elements are installed between the air cooling chamber and the air heating chamber, at that. There is a temperature sensor to measure the temperature of dried air inside the air heating chamber, and under the air cooling chamber there is a container for collection of condensate with a condensate level gauge installed inside. There is a flow meter integrated in the system.

This system for monitoring coolant leakages is quite complicated and oversized, for it requires additional piping connections for regular flushing and drying of measuring vessels of demineralized water circuits and compressed air circuits, so with this scope of equipment this system cannot be used for detection of leakages in NPP cooling pools. Besides, such a system cannot help in detection which exactly welded joint is leaking.

There is also information about a system of coolant leakage detection inside NPP rooms (utility model patent RF No 111709, IPC G21C 17/02, published on 20.12.2011). This system includes an ambient air sampling line and cooler, a moisture separator with a condensate drain pipe, gas flow heater, flow meter and flow booster sequentially installed therein. A two-way flow regulator is installed in the sampling line upstream the cooler. One of the outlets of this regulator is connected to the gas inlet of the cooler, and to the humidity and temperature measuring unit which installed in the sampling line downstream the heater, and the bypass line. One of the bypass outlets is connected to the second outlet of the two-way flow regulator and the other outlet - to the sampling line downstream the heater. The system includes a module for measuring aerosol volumetric activity integrated in the sampling line downstream the flow meter, and the module for measuring the quality of condensate which is located downstream the flow meter. The system also has two temperature sensors and one pressure sensor.

However, the system, like the one previously described in a similar patent, is too much complicated and oversized because of a vacuum pump and a compressor-based refrigerator unit integrated in the system. Besides, such a system cannot help in detection which exactly welded joint is leaking.

The closest equivalent of the proposed invention is a detection system for monitoring leakages in the cooling pool at NPPs (RF patent for invention No 2589726, IPC G21C17/022, G01M3/00, published on 10.07.2016), where the leakage monitoring system for cooling pools is represented as a combination of the following sensors: a flow gauge for the water supplied through the cleaning system pipeline, a level control sensor installed on the standard installation points of fuel elements, two temperature and humidity sensors located one in the outlet and the other one in the inlet of ventilation system at the reactor room; a high level alarm for radioactive water leakages; all outputs of the above sensors are electrically connected via an input device to the controller; the controller output is connected to the input of high level alarm for radioactive water leakages and to the computer; the controller has an input device designed to add data about the number of service personnel and fuel elements; the system is equipped for uninterruptible power supply unit for continuous power supply.

This solution makes the detection system for monitoring leakages in the cooling pools not so much oversized due to the use of automation facilities. The disadvantages of this solution were as below: it was impossible to detect which exactly welded joint was leaking without preliminary radioactivity removal; radioactive leakages could penetrate the concrete side walls of the cooling pool; a drain pan under the pool bottom was necessary, however, radioactivity safety was still not sufficient due to the fact that it was impossible to control the airtightness of the drain pan. At this point, as it is clear from all the above solutions described in the background of the invention, the lack of information about exact location of leakage points in the cooling pool results in longer maintenance intervals required for the repair of the cooling pool after emptying and water removal, as those leakage points require additional measures for detection.

Other systems are known from JP S6058595, JP S5757233, JP S53161683 and JP S61256235.

### Summary

The objective of this invention is to develop a leakage control system for monitoring leakages in the cooling pool. This system is expected to enhance safety of spent fuel storage in the pool because as it makes it possible to detect leaking welded joints with no need to remove radioactivity and avoid penetration of radioactive water to the side walls of the cooling pool. It will also provide for a shorter maintenance time due to the possibility of preliminary detection of leaking welded joints.

The technical result of this invention is the enhanced safety of spent fuel storage in the pool due to the possibility to detect leaking welded joints with no need to remove radioactivity and avoid penetration of radioactive water to the side walls of the cooling pool. It will also provide for a shorter maintenance time due to the possibility of preliminary detection of leaking welded joints during operation.

The technical result is implemented with the help of a leakage detection system according to claim 1.

It is recommended to integrate a compressed air supply unit with a compressed air supply valve into the leakage control system. The compressed air supply unit is connected to the pipeline by means of the compressed air supply valve. The compressed air supply unit is designed to supply compressed air via the compressed air supply valve. The pipeline and the compressed air supply valve are integrated in the metal fence around the welded joints as an additional means of leakage detection.

It is recommended to integrate a coloured water supply unit with a coloured water supply valve into the leakage control system. The coloured water supply unit is connected to the pipeline by means of the coloured water supply valve. The coloured water supply unit is designed to supply coloured water via the coloured water supply valve. The pipeline and the coloured water supply valve are integrated in the metal fence around the welded joints as an additional means of leakage detection.

It is recommended to install a receiving valve in the outlet of the leakage collector tank, and a return valve - at its outlet.

It is recommended to install a pump between the leakage collector tank and a return valve.

It is feasible to use a pressure sensor as a liquid level gauge.

It is recommended to use a conductivity transmitter as a liquid level gauge.

It is recommended to have a control module connected to all the valves integrated in the system and to the pump with the use of wired or wireless connections.

It is feasible to add a pressure sensor for the compressed air to the compressed air supply unit.

### Brief description of figures

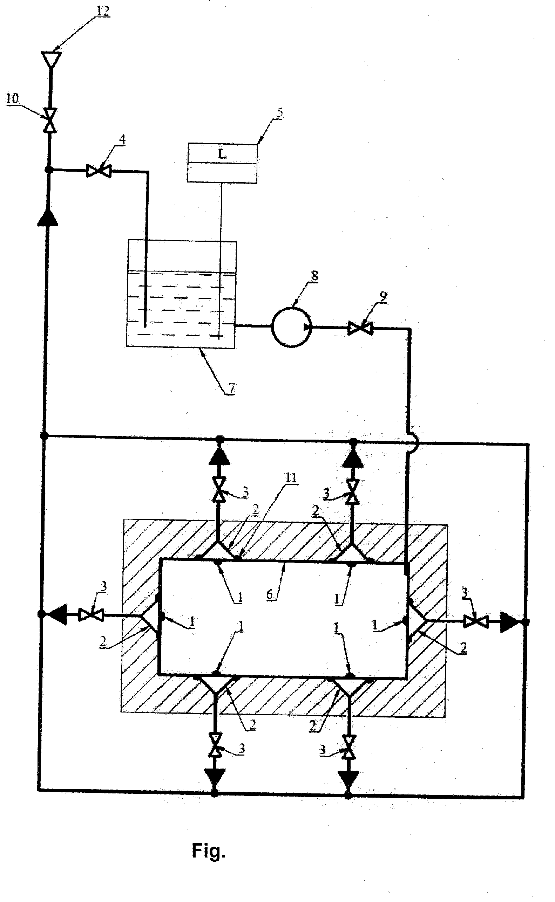

The core idea of the proposed invention is represented in Figure where the embodiment of the leakage control system is shown: it includes the metal lining of the cooling pool (6) with the welded joints (1) and surrounded with a concrete wall (shaded area), each welded joint (1) is fenced with a metal guard (2) which are secured against the cooling pool (6) with external welded joints (11) and connected with the valve installed tubes (3) to the pipeline designed with the possibility of discharging potential leakages via a receiving valve (4) to the leakage collector tank (7) which is equipped with a level gauge (5). The leakage water can go back from the leakage collector tank (7) to the cooling pool (6) with the help of the pump (8) via the return valve (9). The system also includes a compressed air supply valve (10) designed to supply either compressed air or coloured water to the system, and equipped also with a compressed air pressure sensor (12). All valves and the pump are connected to the control module (not shown on the Figure) via wired and wireless connections, and the control module is designed to control all the valves and the pump.

### Embodiments

**The functioning of the leakage control system for spent fuel cooling pool can be described as follows:** In the period when the spent nuclear fuel is stored in the pool (6) the operator uses the control module for regular opening of the valves (3), when one of the valves is open, the rest of the valves are closed, at this point the operator should check the indications of the level control sensor (5) with the return valve (9) closed and with the pump (8) OFF. In case the indications displayed by the level gauge (5) remain without changes, the operator understands that the welded joint (1) which corresponds to the opened valve (3) is free of leakages. In case the level gauge (5) indicates that the level in the leakage collector tank (7) has increased, the operator understands that the welded joint (1) which corresponds to the opened valve (3) is leaking. After that the operator applies the same procedure to check the rest of the welded joints. When the inspection is completed or the leakage collector tank (7) is full, the operator gets the liquid from the leakage collector tank (7) back to the pool by opening the return valve (9) and using the pump (8). Then the operator closes the valves (3) which correspond to those welded joints (1) for which the leakage was detected during the inspection, in order to prevent any radioactive water to penetrate the side walls of the cooling pool. It should be noted that radioactive water which leaked out of the pool (6) through the faulty welded joint (1) is prevented from penetrating the side walls by metal guards (2), this makes it possible to continue using the pool up to the scheduled maintenance, the duration of the maintenance will also be reduced because the location of leakages on the welded joints (1) has already been detected.

In its preferable embodiment the leakage control system for the spent fuel cooling pool is additionally equipped with a compressed air supply valve (10) designed to supply compressed air, for example, from a compressed air cylinder. In this embodiment the operator supplies the compressed air to the system by opening the compressed air supply valve (10) and all or part of the valves (3), with the receiving valve (4) and the return valve (9) shut off. At this point the compressed air goes through the pipelines and through the open valves (3), gets to the cooling pool (6) through the leaking welded joints (1) and can be identified by slight bubbles which clearly show how airtight each welded joint is, and where exactly the joint is leaking. Use of telemetric facilities makes it possible to detect the leakages without emptying the pool (6). Instead of compressed air in one of the embodiments the coloured water is used, as it provides for the same result.

Moreover, if an additional pressure sensor (12) for the compressed air is integrated in the compressed air supply unit (10) it will be possible to check the airtightness of external welded joints (11) which secure the metal guards (2) against the cooling pool (6). To do this, the operator should initiate the compressed air supply to the pipeline, for example, with one of the valves (3) open and the rest of the valves (3), receiving valve (4) and return valve (9) closed. If no bubbles appear near the internal surface of the corresponding welded joint (1), the operator should check the indications of the compressed air pressure sensor (12). In case the pressure has dropped, the operator understands that this welded joint securing the metal guard (11) is leaking.

### Industrial applicability

The system for detection of leakages in the spent fuel cooling pools ensures improved radioactive safety and reliable storage of spent nuclear fuel in the cooling pools, as well as allows reducing the duration of maintenance for the cooling pools, so it can be widely used in nuclear power generation.

## Claims

1. System for monitoring leaks of liquid from a spent fuel pool (6) which includes a pipeline, a control module, a liquid level gauge (5) connected to the control module, a leakage collector (7) and a plurality of metal guards (2), wherein each welded joint (1) in the spent fuel pool (6) is fenced with one of the plurality of metal guards (2),
**characterized in that**:
each metal guard (2) is connected to the pipeline by means of a tube with a valve (3), the pipeline is connected on both sides to the leakage collector (7) which is equipped with the liquid level gauge (5), the control module is connected to all the valves (3) and is configured to control the valves (3).

2. System for monitoring leaks of liquid from a spent fuel pool (6) according to claim 1 **characterised by** an additional compressed air supply unit with a compressed air supply valve (10), the compressed air supply unit is connected to the pipeline by means of the compressed air supply valve (10), the compressed air supply unit is designed to supply compressed air via the compressed air supply valve (10), the pipeline and the compressed air supply valve (10) are integrated in the metal guard fence (2) around the welded joints (1) as an additional means of leakage detection.

3. System for monitoring leaks of liquid from a spent fuel pool (6) according to claim 1 **characterised by** an additional coloured water supply unit with a coloured water supply valve, the coloured water supply unit is connected to the pipeline by means of the coloured water supply valve,the coloured water supply unit is designed to supply coloured water via the coloured water supply valve, the pipeline and the coloured water supply valve are integrated in the metal guard fence (2) around the welded joints (1) as an additional means of leakage detection.

4. System for monitoring leaks of liquid from a spent fuel pool (6) according to claim 1 **characterised by** a receiving valve (4) installed in the inlet of the leakage collector tank (7) and a return valve (9) at its outlet.

5. System for monitoring leaks of liquid from a spent fuel pool (6) according to claim 1 **characterised by** an additional pump (8) installed between the leakage collector tank (7) and a return valve (9).

6. System for monitoring leaks of liquid from a spent fuel pool (6) according to claim 1 **characterised by** level control gauge (5) designed as a pressure sensor.

7. System for monitoring leaks of liquid from a spent fuel pool (6) according to claim 1 **characterised by** level control gauge (5) designed as a conductivity sensor.

8. System for monitoring leaks of liquid from a spent fuel pool (6) according to claim 1 **characterised by** the control module connected to all the valves (3) in the system and to the pump (8) either via wired or wireless communication and designed to control all of them.

9. System for monitoring leaks of liquid from a spent fuel pool (6) according to claim 1 **characterised by** a compressed air supply unit additionally fitted with a compressed air pressure sensor (12).

## Patentansprüche

1. System zur Überwachung von Flüssigkeitslecks aus einem Becken (6) mit verbrauchtem Brennstoff, das eine Rohrleitung, ein Steuermodul, eine mit dem Steuermodul verbundene Füllstandsanzeige (5) für Flüssigkeiten, einen Leckagesammler (7) und eine Vielzahl von Metallschutzvorrichtungen (2) umfasst, wobei jede Schweißstelle (1) in dem Becken (6) mit verbrauchtem Brennstoff mit einer der Vielzahl von Metallschutzvorrichtungen (2) umzäunt ist,
**dadurch gekennzeichnet, dass**:
jede Metallschutzvorrichtung (2) mit der Rohrleitung mittels eines Rohrs mit einem Ventil (3) verbunden ist, die Rohrleitung auf beiden Seiten mit dem Leckagesammler (7) verbunden ist, der mit der Füllstandsanzeige (5) für Flüssigkeiten ausgestattet ist, und das Steuermodul mit allen Ventilen (3) verbunden und so konfiguriert ist, dass es die Ventile (3) steuert.

2. System zur Überwachung von Flüssigkeitslecks aus einem Becken (6) mit verbrauchtem Brennstoff nach Anspruch 1, **gekennzeichnet durch** eine zusätzliche Druckluftversorgungseinheit mit einem Druckluftversorgungsventil (10), wobei die Druckluftversorgungseinheit mittels des Druckluftversorgungsventils (10) mit der Rohrleitung verbunden ist, die Druckluftversorgungseinheit zum Zuführen von Druckluft über das Druckluftversorgungsventil (10) ausgebildet ist, und die Rohrleitung und das Druckluftversorgungsventil (10) als zusätzliches Mittel zur Leckageerfassung in den Metallschutzzaun (2) um die Schweißstellen (1) herum integriert sind.

3. System zur Überwachung von Flüssigkeitslecks aus einem Becken (6) mit verbrauchtem Brennstoff nach Anspruch 1, **gekennzeichnet durch** eine zusätzliche Versorgungseinheit für gefärbtes Wasser mit einem Versorgungsventil für gefärbtes Wasser, wobei die Versorgungseinheit für gefärbtes Wasser mittels des Versorgungsventils für gefärbtes Wasser mit der Rohrleitung verbunden ist, die Versorgungseinheit für gefärbtes Wasser zum Zuführen von gefärbtem Wasser über das Versorgungsventil für gefärbtes Wasser ausgebildet ist, und die Rohrleitung und das Versorgungsventil für gefärbtes Wasser als zusätzliches Mittel zur Leckageerfassung in den Metallschutzzaun (2) um die Schweißstellen (1) herum integriert sind.

4. System zur Überwachung von Flüssigkeitslecks aus einem Becken (6) mit verbrauchtem Brennstoff nach Anspruch 1, **gekennzeichnet durch** ein Aufnahmeventil (4), das im Einlass des Leckagesammelbehälters (7) installiert ist, und ein Rücklaufventil (9) an seinem Auslass.

5. System zur Überwachung von Flüssigkeitslecks aus einem Becken (6) mit verbrauchtem Brennstoff nach Anspruch 1, **gekennzeichnet durch** eine zusätzliche Pumpe (8), die zwischen dem Leckagesammelbehälter (7) und einem Rücklaufventil (9) installiert ist.

6. System zur Überwachung von Flüssigkeitslecks aus einem Becken (6) mit verbrauchtem Brennstoff nach Anspruch 1, **gekennzeichnet durch** eine Füllstandskontrollanzeige (5), die als Drucksensor ausgebildet ist.

7. System zur Überwachung von Flüssigkeitslecks aus einem Becken (6) mit verbrauchtem Brennstoff nach Anspruch 1, **gekennzeichnet durch** eine Füllstandskontrollanzeige (5), die als Leitfähigkeitssensor ausgebildet ist.

8. System zur Überwachung von Flüssigkeitslecks aus einem Becken (6) mit verbrauchtem Brennstoff nach Anspruch 1, **gekennzeichnet durch** das Steuermodul, das mit allen Ventilen (3) des Systems und mit der Pumpe (8) entweder über eine drahtgebundene oder drahtlose Kommunikation verbunden und dazu ausgebildet ist, sie alle zu steuern.

9. System zur Überwachung von Flüssigkeitslecks aus einem Becken (6) mit verbrauchtem Brennstoff nach Anspruch 1, **gekennzeichnet durch** eine Druckluftversorgungseinheit, die zusätzlich mit einem Druckluftdrucksensor (12) ausgestattet ist.

## Revendications

1. Système de surveillance de fuites de liquide provenant d'un bassin de combustible usé (6) qui inclut une tuyauterie, un module de commande, une jauge de niveau de liquide (5) connectée au module de commande, un collecteur de fuites (7) et une pluralité de protections métalliques (2),
dans lequel chaque joint soudé (1) dans le bassin de combustible usé (6) est clôturé par l'une de la pluralité de protections métalliques (2),
**caractérisé en ce que** :
chaque protection métallique (2) est connectée à la tuyauterie au moyen d'un tube avec une vanne (3), la tuyauterie est connectée sur les deux côtés au collecteur de fuites (7) qui est équipé de la jauge de niveau de liquide (5), le module de commande est connecté à toutes les vannes (3) et est configuré pour commander les vannes (3).

2. Système de surveillance de fuites de liquide provenant d'un bassin de combustible usé (6) selon la revendication 1, **caractérisé par** une unité d'alimentation d'air comprimé additionnelle avec une vanne d'alimentation d'air comprimé (10), l'unité d'alimentation d'air comprimé étant conçue pour alimenter de l'air comprimé via la vanne d'alimentation d'air comprimé (10), la tuyauterie et la vanne d'alimentation d'air comprimé (10) étant intégrées dans la clôture de protection métallique (2) autour des joints soudés (1) à titre de moyen additionnel de détection de fuite.

3. Système de surveillance de fuites de liquide provenant d'un bassin de combustible usé (6) selon la revendication 1, **caractérisé par** une unité alimentation d'eau colorée avec une vanne d'alimentation d'eau colorée, l'unité d'alimentation d'eau colorée étant connectée à la tuyauterie au moyen de la vanne d'alimentation d'eau colorée, l'unité d'alimentation d'eau colorée étant conçue pour alimenter une eau colorée via la vanne d'alimentation d'eau colorée, la tuyauterie et la vanne d'alimentation d'eau colorée étant intégrées dans la clôture de protection métallique (2) autour des joints soudés (1) à titre de moyen additionnel de détection de fuites.

4. Système de surveillance de fuites de liquide provenant d'un bassin de combustible usé (6) selon la revendication 1, **caractérisé par** une vanne de réception (4) installée dans l'entrée du réservoir collecteur de fuites (7) et un clapet anti-retour (9) au niveau de sa sortie.

5. Système de surveillance de fuites de liquide provenant d'un bassin de combustible usé (6) selon la revendication 1, **caractérisé par** une pompe additionnelle (8) installée entre le réservoir collecteur de fuites (7) et un clapet anti-retour (9).

6. Système de surveillance de fuites de liquide provenant d'un bassin de combustible usé (6) selon la revendication 1, **caractérisé par** une jauge de commande de niveau (5) conçue comme un capteur de pression.

7. Système de surveillance de fuites de liquide provenant d'un bassin de combustible usé (6) selon la revendication 1, **caractérisé par** une jauge de commande de niveau (5) conçue comme un capteur de conductivité.

8. Système de surveillance de fuites de liquide provenant d'un bassin de combustible usé (6) selon la revendication 1, **caractérisé en ce que** le module de commande est connecté à toutes les vannes (3) dans le système et à la pompe (8) soit via une communication filaire, soit via une communication non filaire, et est conçu pour commander l'ensemble de ceux-ci.

9. Système de surveillance de fuites de liquide provenant d'un bassin de combustible usé (6) selon la revendication 1, **caractérisé par** une unité d'alimentation d'air comprimé additionnelle équipée d'un capteur de pression d'air comprimé (12).
